# EUROPÄISCHE PATENTANMELDUNG

(11) **EP 3 626 046 A1**
(43) Veröffentlichungstag der Anmeldung: **25.03.2020**
(21) Anmeldenummer: 18000751.0
(22) Anmeldetag: 24.09.2018
(51) Int. Cl.: A01G 9/12

(54) **TOMATENSTAB ALS STÜTZE FÜR TOMATENPFLANZEN**

(71) Anmelder: Tumalski, Tadeusz, 09-401 Plock (PL)
(72) Erfinder: Tumalski, Tadeusz, 09-401 Plock (PL)

(57) **Zusammenfassung**

Die Erfindung betrifft einen Tomatenstab (1) als Stütze für Tomatenpflanzen. Die Erfindung bietet die Möglichkeit mit dem Stab (6) die Tomatenstütze auf die gewünschte Höhe der Pflanze beliebig zu verlängern. Darüber hinaus bietet die vorliegende Erfindung die Möglichkeit einer schnellen und einfachen Korrektur der Anbindung der Pflanze an den Stab Ohne, dass lästige Knoten geöffnet und wieder gebunden werden müssen.

Die Tomatenpflanze und die Tomaten werden mittels eines Streifens aus Unkrautschutzvlies (15) an den Stangen (1) oder (6) gehalten durch das Aufspießen des Streifens auf dornartige Spitzen (3) bzw. (11) des Tomatenstabes (1) und (6).

## Beschreibung

Tomatenpflanzen sind von Natur aus nicht standfest und ohne Stütze kriechen die Triebe am Boden entlang. Damit Tomaten gesund und vital gedeihen können, ist daher eine Stütze, sog. Rankhilfe unverzichtbar. Da Tomatenpflanzen aber über keine Haftorgane verfügen, müssen sie an den Stützen bei ihrem Wachstum von unten nach oben angebunden werden.

So entsteht im Tomatenanbau, besonders bei Hobbygärtnern der Bedarf an einer geeigneten Stütze für die Tomaten. Einer Stütze, die in der Wachstums- und Erntezeit die Pflanze selbst und das Gewicht der Tomaten auf der Pflanze hält und bei Bedarf auch verlängert werden kann, wenn z.B. der Hobbygärtner sich in der Tomatensorte vergriffen hat und die Pflanzen wachsen höher als gedacht. Ein anderes Problem entsteht, wenn die Tomatenpflanze bei Wachstum oben neu angebunden werden muss, dann die untere Anbindung muss oft korrigiert (verkürzt) werden, damit die Tomatenpflanze stabil an der Stütze bleibt.

Die bisherigen Stützen für die Tomatenpflanzen wie Bambusstäbe, Holzstöcke, Spiralstäbe aus Kunststoff oder Metall in Verbindung mit den, in Hobbygärtnerforen als Bindematerial angeratenen, in Streifen geschnittenen Altkleider oder Strümpfen sind in der Anwendung recht umständlich weil die Streifen an den Stock bzw. Stab in Knoten gebunden werden müssen, was eine nachträgliche Korrektur der Anbindung so gut wie unmöglich macht. Bei den Holzstöcken und Bambus entsteht zusätzlich das Problem, dass sie des Öfteren gewaschen und desinfiziert werden müssen, denn sonst nutzen die listigen Sporen der Krautfäule das natürliche Material, um sich daran festzuhalten und die Tomatenpflanze zu befallen.

Ein anderes Problem entsteht dadurch, das verschiedene Sorten von Tomaten verschiedene Wachstumshöhen erreichen, was verschiedene Längen der Pflanzenstütze verlangt.

Somit ist die Aufgabe der vorliegenden Erfindung eine Pflanzenstütze zu entwickeln, die einerseits in der Wachstumsphase der Tomaten unproblematisch velängerbar ist, andererseits eine einfach anzubringende und leicht korrigierbare Anbindung der Tomatenpflanzen an die Stütze bittet und das die Sporen der Krautfäule am Material der Stütze nicht haften.

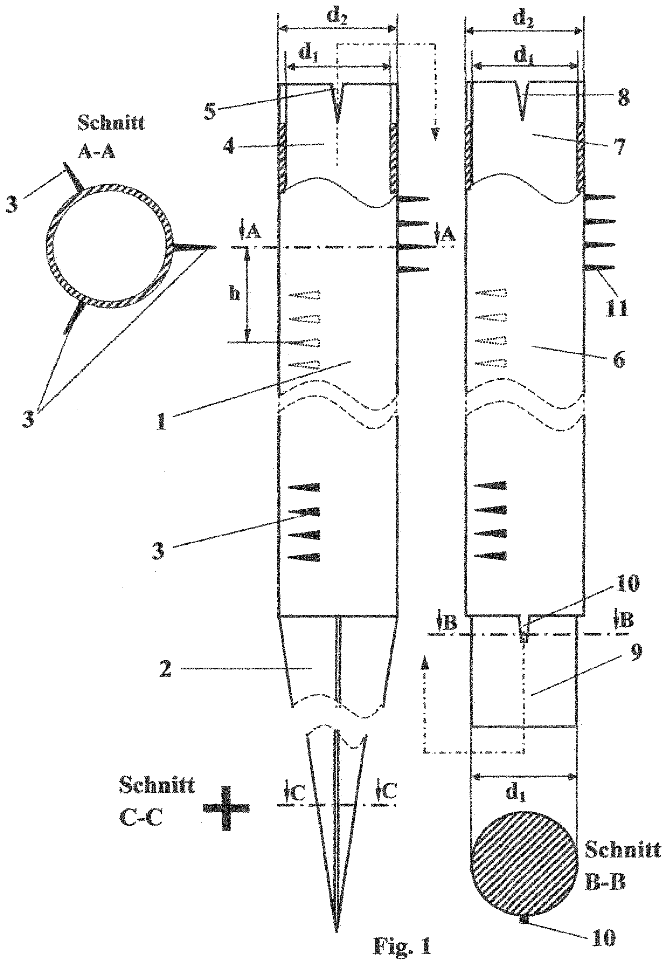

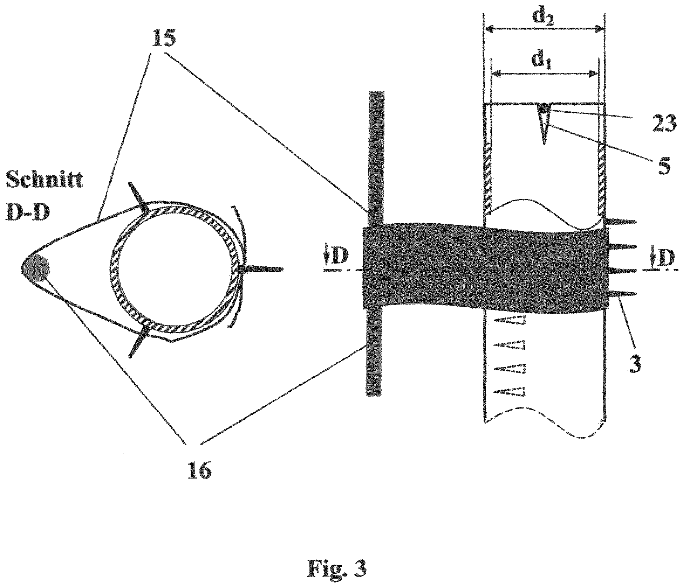

Diese Aufgabe wird dadurch gelöst, dass eine aus vorzugsweise recyceltem und recycelbarem, mit Kohlefasern verstärktem Kunststoff hergestellte Stange (1) Fig. 1 am unteren Ende eine Spitze (2) hat, die in den Boden neben der Tomatenpflanze mit einem z.B. Gummihammer hineingeschlagen wird. Auf der Außenseite diese Stange ragen aus der Stange mehrere Gruppen von Dornen (3) heraus. Die Linien in die die Dorngruppen angeordnet sind, sind in etwa symmetrisch auf dem Umfang der Stange verteilt und die Gruppen einer Linie gegen die Andere um ein wert (h) verschoben, damit der Bindestreifen (15) zwischen den seitlichen Dorngruppen auf die gegenüberliegende Dorngruppe kommt Fig. 3.

Am oberen Ende ist die Stange in eine Muffe (4) geformt mit den Abmessungen (**d₁**) als Innendurchmesser und (**d₂**) als Außendurchmesser. Soll die Länge der Stange (1) für die Höhe der Tomatenpflanze nicht ausreichend sein, kann die Stange (6) als Verlängerung dienen. Der Zylinder (9) der Stange (6) bildet mit der oberen Muffe (4) der Stange (1) eine Steckverbindung, wobei die aus dem unteren Zylinder (9) der Stange (6) herausragende kleine Zunge (10) in die Aussparung (5) der Stange (1) hineinkommt und als Verdrehungsblockade dient.

So ist die Tomatenstange beliebig, auf die nötige Höhe verlängerbar.

Als Bindematerial für die Pflanzen ist vorzugsweise, wegen seiner Eigenschaften, ein einige Zentimeter breiter Streifen aus Unkrautschutzvlies (15) Fig.3 vorgesehen. Dieses Material hat die Eigenschaft, dass er einfach auf die Spitzen (3) oder (11) Fig. 1 des Tomatenstabes aufgespießt werden kann und bei Bedarf abgezogen und wieder befestigt, ohne dass lästige Knoten aufgemacht werden müssen. Da Unkrautschutzvlies schon lange im Gartenbau eingesetzt wird, ist es auch ausreichend getestet, so dass die Befestigungsstreifen keine zusätzliche Belastung des Gartens darstellen und nach der Tomatenernte problemlos entsorgt werden können.

Für höhere Tomatenpflanzen bis 3 Meter Höhe, wie es oft im Gartenhaus der Fall ist, bietet die vorliegende Erfindung des Tomatenstabes eine Möglichkeit einer zusätzlichen Stabilisierung der ganzen Reihe von Tomatenstäben durch aufspannen eines Seils (23) Fig. 3 (oder z.B. einer Wäscheleine), das in die dreieckigen Aussparungen (5) oder (**8**) am oberen Ende der Stangen (1) oder (6) hineingedrückt wird und an den Enden an der Konstruktion des Gewächshauses befestigt.

Bei Tomatensorten wo die einzelne Tomate auch 1 kg Gewicht haben kann, bietet die vorliegende Erfindung auch die Möglichkeit das Gewicht der Tomaten direkt am Tomatenstab mittels des Vliesstreifens abzufangen damit die natürliche Aufhängung der Tomate an der Pflanze nicht reißt, was des Öfteren der Fall ist.

Eine zusätzliche Anwendungsmöglichkeit der vorliegenden Erfindung liegt darin, dass die Stangen (1) (6), die Bodeneinschlaghülse (12) und der Vliesstreifen (15) in Farbe grün hergestellt werden, wodurch die Stangen (1) und (6), die Bodeneinschlaghülse (12) und das Bindestreifen (15) sich von der Farbe der Pflanzen nicht unterscheiden, was bei einer, der Pflanzengröße proportionalen, Auslegung der Abmessungen der Stangen (1) und (6) und der Breite des Bindematerials (15), deren Verwendung als Stütze für Garten- und Topfzierpflanzen erlaubt ohne, dass die Stütze den Anblick der Zierpflanzen farblich stört.

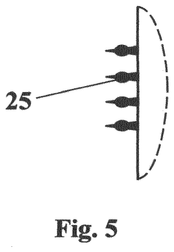

Für besseren Halt des Bindestreifens aus Unkrautschutzvlies (15) können die dornartigen Spitzen (3) u. (11) der Stangen (1) und (6) in der Mitte eine Verdickung (25) haben, wie die Fig. 5 es zeigt. Dies macht die Verbindung des Vliesstreifens am Tomatenstab wesentlich stabiler.

Kurzbeschreibung der Zeichnungen
- Fig. 1: Schematische Darstellung des Tomatenstabes (1) mit dem Querschnitt A-A, des Verlängerungstabes (6) mit dem Querschnitt B-B durch das untere Ende des Stabes (6) und mit dem Querschnitt C-C durch die Bodeneischlagspitze

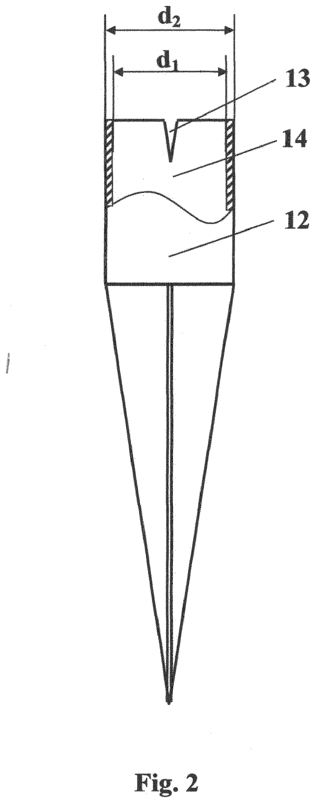

- Fig. 2: Bodeneinschlaghülse für direkte Verwendung des Stabes (6) als Tomatenstütze
- Fig. 3: Anwendungsbeispiel des Tomatenstabes für eine Pflanze mit dem Querschnitt D-D durch den Tomatenstab, Bindestreifen und die Pflanze

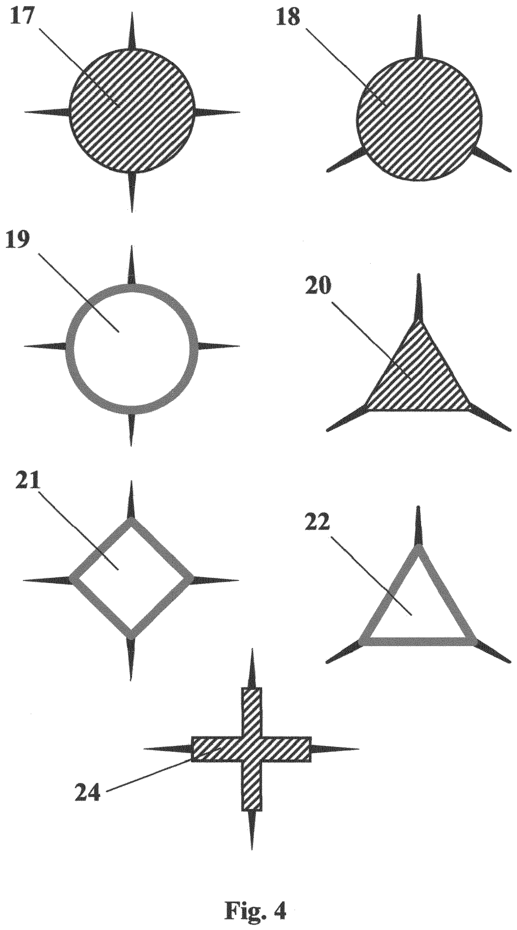

- Fig. 4: Runde, dreieckige, quadratische und kreutz- Querschnitte der Stäbe die in der Herstellung des erfindungsgemäßen Tomatenstabes in Frage kommen.
- Fig. 5: Die dornartigen Spitzen des Tomatenstabes mit der Verdickung (25) in der Mitte

## Patentansprüche

1. Tomatenstab **dadurch gekennzeichnet, dass** eine aus Kunststoff hergestellte Stange (1) an dem unteren Ende eine Bodeneinschlagspitze (2), an dem oberem Ende eine rohrartige Muffe (4) mit dem Innendurchmesser (**d₁**) und Außendurchmesser (**d₂**), mit vier im Kreutz angeordneten dreieckigen Aussparungen (5) und auf der ganzen Länge gleichmäßig-symmetrisch auf dem Umfang der Stange angeordnete, in der Höhe um das Wert (h) versetzte zwei, drei, oder mehr, in Linie angeordneten Gruppen von drei, vier, oder mehreren dornartigen Spitzen (3) aufweist.

2. Tomatenstab nach Anspruch 1 **dadurch gekennzeichnet, dass** eine aus dem gleichen Kunststoff wie in Anspruch 1 hergestellte Stange (6) mit dem Außendurchmesser (**d₂**) an dem unteren Ende mit einem Zylinder (9) vom Außendurchmesser (**d₁**) und aus dem Zylinder herausragenden kleinen, trapezförmigen Zunge (10) endet so, dass der Zylinder (9) mit der rohrartigen Muffe (4) des Stabes (1) eine Steckverbindung bildet, und dass die Stange (6) an dem oberen Ende die gleiche wie im Anspruch 1 rohrartige Muffe (7) mit dem Innendurchmesser (**d₁**) und Außendurchmesser (**d₂**), mit vier im Kreutz angeordneten dreieckigen Aussparungen (**8**) und auf der ganzen Länge gleichmäßig-symmetrisch auf dem Umfang der Stange angeordnete, in der Höhe um das Wert (h) versetzte zwei, drei, oder mehr, in Linie angeordneten Gruppen von drei, vier, oder mehreren dornartigen Spitzen (11) aufweist.

3. Tomatenstab nach Anspruch 1 und 2 **dadurch gekennzeichnet, dass** anstatt der Stange (1) mit der Bodeneinschlagspitze (2) eine Bodeneinschlaghülse (12) mit den gleichen Abmessungen (**d₁**) und (**d₂**) und der dreieckigen Aussparung (13) in der oberen Stabaufnahme (14), als Bodenbefestigung für den Stab (6) eingesetzt wird.

4. Tomatenstab nach Anspruch 1 bis 3 **dadurch gekennzeichnet, dass** zur Befestigung und Fixierung der Tomatenpflanzen ein, einige Zentimeter breiter Streifen Stoff (15), vorzugsweise aus Unkrautschutzvlies, mit einem Ende auf die dornartigen Spitzen (3) bzw. (11) aufgespießt wird, um die zu schützende Pflanze (16) gelegt und mit dem zweiten Ende zurück auf die Dornspitzen (3) bzw. (11) des Tomatenstabes aufgespießt.

5. Tomatenstab nach Anspruch 1 bis 4 **dadurch gekennzeichnet, dass** die Stange (1) und (6) runde (17) (18) (19), dreieckige (20) (22), quadratische (21) oder eine Kreutz-Form (24) im Querschnitt haben und die Stäbe (1) und (6) als Hohlprofile (Rohre) (19) (21) (22), oder als Vollprofile (17) (18) (20) zwei, drei oder vier Reihen der dornartigen Spitzen (3) oder (11) aufweisen und die Bodeneischlaghülse (12) eine Stabaufnahme (14) hat, die dem äußeren Querschnitt der Stange (6) entspricht, wobei für den dreieckigen und quadratischen Querschnitt Aussparung (5) (8) und (13) sich erübrigt.

6. Tomatenstab nach Anspruch 1 bis 5 **dadurch gekennzeichnet, dass** die Stange (1) und (6), die Bodeneinschlaghülse (12) und das Bindematerial (15), vorzugsweise aus Unkrautschutzvlies, in Farbe grün hergestellt werden.

7. Tomatenstab nach Anspruch 1 bis 5 **dadurch gekennzeichnet, dass** zur seitlichen Stabilisierung der ganzen Reihe von Tomatenpflanzen zwischen den Tomatenstäben ein Seil (23) aufgespannt wird, in die Aussparrungen (5) bzw. (8) der Tomatenstange hineingedrückt und an die Konstruktion des Gewächshauses, öder an seitliche Pfeile befestigt.

8. Tomatenstab nach Anspruch 1 **dadurch gekennzeichnet, dass** die Stange (1) unten mit der Bodeneinschlagspitze (2), aber am oberen Ende ohne den dreieckigen Aussparungen (5) als Rohr, oder als Vollprofil endet.

9. Tomatenstab nach Anspruch 1 bis 8 **dadurch gekennzeichnet, dass** die dornartigen Spitzen (3) bzw. (11) der Stangen (1) und (6) in der Mitte eine Verdickung (25) aufweisen.

## Geänderte Patentansprüche

### Geänderte Patentansprüche gemäss Regel 137(2) EPÜ.

1. Tomatenstab **dadurch gekennzeichnet, dass** eine aus Kunststoff hergestellte Stange (1) an dem unteren Ende eine Bodeneinschlagspitze (2), an dem oberem Ende eine rohrartige Muffe (4) mit dem Innendurchmesser (**d₁**) und Außendurchmesser (**d₂**)**,** mit vier im Kreutz angeordneten dreieckigen Aussparungen (5) und auf der ganzen Länge gleichmäßig-symmetrisch auf dem Umfang der Stange angeordnete, in der Höhe um das Wert (h) versetzte zwei, drei, oder mehr, in Linie angeordneten Gruppen von drei, vier, oder mehreren dornartigen Spitzen (3) aufweist und zur Befestigung und Fixierung der Tomatenpflanzen ein, einige Zentimeter breiter Streifen Stoff (15), vorzugsweise aus Unkrautschutzvlies, mit einem Ende auf die dornartigen Spitzen (3) bzw. (11) aufgespießt wird, um die zu schützende Pflanze (16) gelegt und mit dem zweiten Ende zurück auf die Dornspitzen (3) bzw. (11) des Tomatenstabes aufgespießt.

2. Tomatenstab nach Anspruch 1 **dadurch gekennzeichnet, dass** eine aus dem gleichen Kunststoff wie in Anspruch 1 hergestellte Stange (6) mit dem Außendurchmesser (**d₂**) an dem unteren Ende mit einem Zylinder (9) vom Außendurchmesser (**d₁**) und aus dem Zylinder herausragenden kleinen, trapezförmigen Zunge (10) endet so, dass der Zylinder (9) mit der rohrartigen Muffe (4) des Stabes (1) eine Steckverbindung bildet, und dass die Stange (6) an dem oberen Ende die gleiche wie im Anspruch 1 rohrartige Muffe (7) mit dem Innendurchmesser (**d₁**) und Außendurchmesser (**d₂**)**,** mit vier im Kreutz angeordneten dreieckigen Aussparungen (**8**) und auf der ganzen Länge gleichmäßig-symmetrisch auf dem Umfang der Stange angeordnete, in der Höhe um das Wert (h) versetzte zwei, drei, oder mehr, in Linie angeordneten Gruppen von drei, vier, oder mehreren dornartigen Spitzen (11) aufweist.

3. Tomatenstab nach Anspruch 1 und 2 **dadurch gekennzeichnet, dass** eine Bodeneinschlaghülse (12) mit den gleichen Abmessungen (**d₁**) und (**d₂**) und der dreieckigen Aussparung (13) in der oberen Stabaufnahme (14), als Bodenbefestigung für den Stab (6) eingesetzt wird.

4. Tomatenstab nach Anspruch 1 bis 3 **dadurch gekennzeichnet, dass** die Stange (1) und (6) runde (17) (18) (19), dreieckige (20) (22), quadratische (21) oder eine Kreutz-Form (24) im Querschnitt haben und die Stäbe (1) und (6) als Hohlprofile (Rohre) (19) (21) (22), oder als Vollprofile (17) (18) (20) zwei, drei oder vier Reihen der dornartigen Spitzen (3) oder (11) aufweisen und die Bodeneischlaghülse (12) eine Stabaufnahme (14) hat, die dem äußeren Querschnitt der Stange (6) entspricht, wobei für den dreieckigen und quadratischen Querschnitt Aussparung (5), (8) und (13) sich erübrigt.

5. Tomatenstab nach Anspruch 1 **dadurch gekennzeichnet, dass** die Stange (1) unten mit der Bodeneinschlagspitze (2) und am oberen Ende gerade als Rohr, oder als Vollprofil endet.

6. Tomatenstab nach Anspruch 1 bis 5 **dadurch gekennzeichnet, dass** die dornartigen Spitzen (3) bzw. (11) der Stangen (1) und (6) in der Mitte eine Verdickung (25) aufweisen.
